# EUROPEAN PATENT SPECIFICATION

(11) **EP 1 562 438 B1**
(45) Date of publication and mention of the grant of the patent: **17.01.2007**
(21) Application number: 03779449.2
(22) Date of filing: 31.10.2003
(51) Int. Cl.: A23G 3/00, A23L 1/212

(54) **AERATED CONFECTION CONTAINING HIGH LEVELS OF FRUIT SOLIDS AND METHOD OF MAKING SAME**
AUFGESCHLAGENE SÜSSWARE MIT HOHEM GEHALT AN FESTEN FRUCHTBESTANDTEILEN UND METHODE ZU DEREN HERSTELLUNG
CONFISERIE AEREE A FORTE TENEUR EN MORCEAUX DE FRUITS ET METHODE DE FABRICATION

(30) Priority: 31.10.2002 US 422812 P
(43) Date of publication of application: 17.08.2005
(73) Proprietor: KELLOGG COMPANY, Battle Creek, MI 49016-3599 (US)
(72) Inventor: ROY, Pradip, Grand Rapids, MI 49546 (US); OKOS, Emery, Battle Creek, MI 49014 (US)
(74) Representative: Wilson, Gary
(86) International application number: PCT/US2003/034888
(87) International publication number: WO 2004/039168

(56) References cited:
- EP-A- 0 316 145
- US-A- 2 965 493
- US-B1- 6 207 216
- US-B1- 6 432 460

## Description

This invention relates generally to aerated confections such as marbits and marshmallows and, more particularly, to including high levels of fruit solids in such aerated confections.

Aerated confections such as marbits and marshmallows have been known for many years. A marbit is basically a marshmallow formulation that has been dried to a moisture level of generally less than 5%. Marshmallows typically have moisture contents of from 10 to 30%. Past formulations for marbits and marshmallows have included different colors, flavors, or both. Generally, the color has been added by utilizing dyes and the flavor has been added by utilizing flavor extracts or additives. One thing that has been lacking from past marbits and marshmallows has been the incorporation of real fruit solids into the formulation to produce a marbit or marshmallow containing real fruit solids. Prior reports had suggested the use of fruit juices, however, it was found by the present inventors that the acidity of these juices hydrolyzes sugars in the formulation leading to an unworkable formulation. It would be advantageous to develop a method enabling the incorporation of high levels of fruit solids into marbits and marshmallows to produce additional textures, tastes, flavors, and to enhance the nutritional composition of the same.

From US-6432460 an aerated Marshmallow type of product is known which may comprise substantial amounts of fruit juices.

### SUMMARY OF THE INVENTION

In one embodiment the present invention is an aerated confection comprising from 0.5 to 20% by weight on a dry weight basis of fruit solids based on the total weight of the aerated confection and from 0.01 to 0.2% by weight of a hexametaphosphate based on the total weight, the aerated confection having a moisture content of from 1 to 5% by weight.

In another embodiment the present invention is an aerated confection comprising from 0.5 to 20% by weight on a dry weight basis of fruit solids based on the total weight of the aerated confection and from 0.01 to 0.2% by weight of a hexametaphosphate based on the total weight, the aerated confection having a moisture content of from 10 to 30% by weight.

In another embodiment the present invention is a method of forming an aerated confection comprising the steps of providing a sucrose solution comprising sucrose and water at a temperature above the crystallization temperature of the sucrose solution; cooling the sucrose solution to a temperature at or below its crystallization temperature; adding to the cooled sucrose solution of step b) an amount of from 0.5 to 20% by weight of fruit solids based on the final weight of the mallow mixture; further cooling the solution from step c) and adding to the solution from 0.5 to 15% by weight of a film forming agent and from 0.01 to 0.2% by weight of a hexametaphosphate, both based on the final weight of the mallow mixture; and aerating the mallow mixture to a density of from 179.7 to 479.2g/l (1.5 to 4 pounds per gallon) to form the aerated mallow mixture.

These and other features and advantages of this invention will become more apparent to those skilled in the art from the detailed description of a preferred embodiment. The drawings that accompany the detailed description are described below.

### BRIEF DESCRIPTION OF THE DRAWINGS

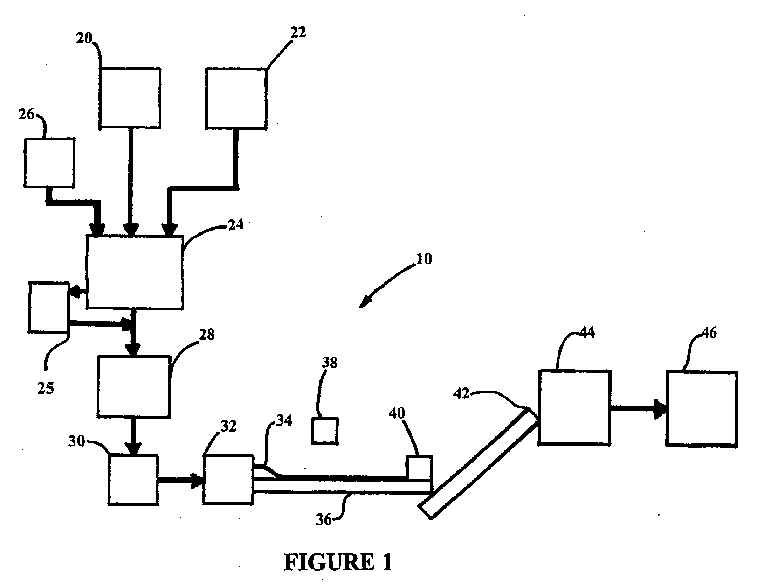

Figure 1 is a schematic diagram of the process according to the present invention.

### DETAILED DESCRIPTION OF A PREFERRED EMBODIMENT

In Figure 1, a schematic diagram of the present process is shown generally at 10. In an initial step, a sucrose solution is prepared in a first tank 20. Tank 20 is thermally controlled and includes a mixer. The sucrose solution is prepared with water to have a solids level of from 82 to 89% and more preferably from 84 to 87%. In addition to sucrose the solution typically includes corn syrup, dextrose, or a mixture of corn syrup and dextrose. The sucrose solution can also be made without corn syrup, dextrose, or both, using instead maltose, lactose, glycerin, maltodextrin, a glucose syrup, or mixtures thereof. The components other than the sucrose are utilized to reduce the tendency for crystallization of the sucrose. In a preferred embodiment, the sucrose solution comprises sucrose, corn syrup, dextrose, and water. In such a sucrose solution there is preferably from 5.0% to 50.0% by weight of corn syrup, dextrose, substitutes for these noted above, or a combination thereof with the remainder comprising water and sucrose. In a typical preparation, the water, sucrose and corn syrup are initially mixed together and heated in first tank 20 to approximately 93.3°C (200°F). Once the sucrose has been hydrated the dextrose is added and the mixture is elevated to a temperature of from 117.2 to 118.9°C (243 to 246°F) with mixing to form the sucrose solution.

A second component is the formation of a film-forming solution in a second tank 22. Second tank 22 is thermally controlled and includes a mixer. A preferred film-forming agent is gelatin; however, other film-forming agents that could be utilized include proteins such as albumin, pectin, carboxymethyl cellulose, alginate, a gum, or mixtures of these film forming agents. Gums that are typically utilized include guar gum, carrageenan, arabic gum, and xanthan gum. The preferred film-forming agent in the present invention is a gelatin, either type A or type B. Two especially preferred gelatins are 225B and 225A. When gelatin is the selected film-forming agent it is heated in water in the second tank 22 at approximately 76.7°C (170°F) to hydrate the film-forming agent and form the film-forming solution. When gelatin is utilized it is generally hydrated with water in a weight to weight ratio of 1:2; thus the solution is 33.33% gelatin and 66.67% water. The other film forming agents are also hydrated as known in the art. Typically at least 30 minutes are required for full hydration of the film-forming agent. Once hydrated, the film-forming solution is maintained at a temperature of from 65.5 to 73.9°C (150 to 165°F) in second tank 22.

The sucrose solution is then pumped into a third tank 24, which is also thermally controlled and includes mixing. The third tank 24 is initially set at a temperature of from 73.9 to 82.2°C (165 to 180°F). Preferably, the third tank 24 is initially set at a temperature of from 79.4 to 82.2°C (175 to 180°F). Once the sucrose solution is completely pumped into the third tank 24 it begins to cool to the initially set temperature. When the sucrose solution reaches a temperature of approximately 82.2°C (180°F) or below crystallization of the sucrose solution begins to occur at this its crystallization temperature. Once the sucrose solution has cooled to 82.2°C (180°F) additional components are added to the sucrose solution from a source tank 26 to form a mallow mix. For simplicity, only a single source tank 26 is shown, however, as would be understood by one of ordinary skill in the art numerous source tanks may be utilized, all feeding into third tank 24.

Once the sucrose solution reaches a temperature of 82.2°C (180°F), the fruit solids are added from a source tank 26 into the mallow mix in third tank 24. Preferably, the fruit solids are added in the form of a dry fruit powder, but wet fruit solids can also be added provided they have a very high solids content of at least 80%. Preferably, the amount of fruit solids on a dry weight basis based on the final weight of the mallow mix comprises from 0.5 to 20.0%, more preferably from 0.5 to 10.0%, and most preferably from 2.0 to 5.0% by weight. The fruit solids can be prepared by a number of known techniques including: drum dried fruit, spray dried fruit, freeze dried fruit, or evaporated fruit puree at a high solids of over 80%. The fruit solids added to third tank 24 can comprise a mixture of any combination of fruit solids that is desired. It is important to add the fruit solids at this point in the procedure. To maintain the nutritional content of the fruit solids it is important that they not be exposed to high temperatures of generally greater than 82.2°C (180 °F). Because, unlike the prior art the present invention uses fruit solids as either dry powders or very high solids wet solids it is not necessary to drive off excess water that is present in the prior art. The prior art has suggested fruit juices or purees, both of which have very high water levels, thus they must be added to the sucrose solution at high temperatures during hydration of the sucrose solution so the excess water can be driven off.

At the same time the fruit solids are added to third tank 24, a seed sugar in an amount of from 1.0 to 20.0% on a dry weight basis based on the total mallow mix weight is added to the mallow mix. Seed sugars ranked in increasing grain size that are useful in the present invention include: 10X powdered sugar; 6X powdered sugar; Bakers Special sugar; fruit sugar; extra fine granulated sugar; fine granulated sugar; and mixtures thereof. Any of these seed sugars alone or in combination is suitable. Especially preferred is a powdered sugar sized to 5% on a 100 USS mesh screen and 80% thru a 200 USS mesh screen. Also especially preferred is a Bakers Special Sugar sized to 2% on a 50 USS mesh screen and 5% thru a 200 USS mesh screen. The mallow mix with the added seed sugar and fruit solids continues to be cooled and mixed until the temperature reaches approximately 73.9°C (165°F). Once the mallow mix reaches a temperature of 71.1°C (160°F), the film-forming solution from the second tank 22 is added to third tank 24. The film-forming solution is added in sufficient amount to provide an amount of preferably from 0.5 to 15.0% by weight on a dry weight basis of the film forming agent or agents based on the total weight of the mallow mix. More preferably the film forming agent or agents are present in an amount of from 1.0 to 7.0% by weight on a dry weight basis based on the total weight of the mallow mix. Also flavors, colors, and a colloidal solution of hexametaphosphate are added from a source tank 26 to the mallow mix. Flavor and colors are added in amounts of from 0.1 to 3.0% by weight. The preferred hexametaphosphate is the sodium salt, although the potassium salt can also be utilized. The hexametaphosphate is preferably added in an amount of from 0.01 to 0.2% and more preferably from 0.02 to 0.05% by weight. The hexametaphosphate is necessary to allow the film-forming solution to firmly gel the final mallow mix to enable formation of an extrudable mass that can be cut into discrete pieces, as described below.

The mallow mix is mixed and cooled until it reaches a temperature of approximately 62.8°C (145°F). The preferred density of the mallow mix is from 1317.7 to 1437.5 g/l (11.0 to 12.0 pounds per gallon) with a moisture level of from 10 to 30% at this point in the procedure. If the fruit solids are added as a wet solids solution the contents of third tank 24 can be passed through an evaporator 25 such as a rotary evaporator, or microfilm cooker or other rapid evaporator to bring the final solids back to a range of from 82 to 86%.

In a next step the mallow mix formed in third tank 24 is pumped into an aerator 28. The aerator 28 is any of a commonly known variety such as Mondo Mixer^{™} or an Oakes^{™}-type aerator. The aerator 28 is thermally controlled to a temperature range of from 51.7 to 73.9°C (125 to 165°F). The mallow mix is aerated to a density of from 179.7 to 479.2 g/l (1.5 to 4.0 pounds per gallon) and more preferably from 239.6 to 359.4 g/l (2.0 to 3.0 pounds per gallon). The aerated mallow mix is then pumped from aerator 28 through a thermally controlled tube 30. The aerated mallow mix is preferably cooled to a temperature range of from 32.2 to 76.7°C (90 to 170°F), more preferably to a temperature of from 46.1 to 62.8°C (115 to 145°F), and most preferably to a temperature of from 51.7 to 57.2°C (125 to 135°F). The chilled, aerated mallow mix is then pumped to an extruder 32 and extruded into a rope 34 having any of a plurality of desired shapes. The extruded rope 34 exits the extruder 32 onto a moving bed conveyor 36 coated with a non-stick coating such as dextrose, glucose, dusting starch, or wax. These non-stick coatings prevent the rope 34 from sticking to the conveyor 36. Additional non-stick coating is deposited onto the top of the rope 34 by a duster 38. The extruded rope 34 is preferably conveyed from the extruder 32 to a cutter 40 over a time period of from 2 to 6 minutes. When the rope 34 reaches the cutter 40 it is cut into appropriate sized pieces, which drop onto a second moving bed conveyor 42 where the cut ends are coated with the non-stick coating from adjacent cut pieces. The cut pieces are then conveyed via conveyor 42 to either a combination dusting and de-dusting drum 44 or through two separate drums comprising a first one for dusting and a second one for de-dusting to remove excess non-stick coating. The two drum embodiment is not shown. Once the cut pieces are de-dusted, if marbits are being made, they are conveyed to a combination dryer and cooler unit 46 and dried at a temperature of from 43.3 to 121.1°C (110 to 250°F), and more preferably from 43.3 to 71.1°C (110 to 160°F), to a final moisture of from 1 to 5%, and more preferably from 2 to 3%. To form marshmallows utilizing the present process the final drying step in the dryer and cooler unit 46 is eliminated and the cut, de-dusted pieces having a moisture of from 10 to 30% are the finished product. Preferably the moisture is from 10 to 25% and more preferably from 10 to 20%.

The hexametaphosphate colloidal solution has been found to be very advantageous in permitting the film-forming solution to sufficiently gel the mallow mix and rope 34 such that it can be cut by cutter 40 in a reasonable time frame. In the absence of hexametaphosphate the rope 34 takes a much longer time to firm and can not be cut uniformly by cutter 40 unless the moving bed conveyor 36 is made very long.

### Example 1

Utilizing the general procedure described above marbits were prepared using the solutions described below following the procedure as above. The sucrose solution was prepared per Table 1 below by combining the water, sucrose, and corn syrup in first tank 20 at a temperature of 93.3°C (200°F). The dextrose was then added and the mixture was heated to a temperature of from 117.2 to 118.9°C (243 to 246°F).

**TABLE 1**

| Component | Kilograms | Percent by Weight |
|---|---|---|
| Sucrose | 81.72 | 65.72 |
| 42 DE Corn Syrup | 15.39 | 12.38 |
| Water | 14.44 | 11.61 |
| Dextrose | 12.8 | 10.29 |
| Total | 124.35 | 100.00 |

The film-forming solution was prepared in second tank 22 utilizing the components described in Table 2 below. The gelatin was heated to 76.7°C (170°F) for at least 30 minutes prior to use and maintained at a temperature of from 65.6 to 73.9°C (150 to 165°F).

**TABLE 2**

| Component | Kilograms | Percent by Weight |
|---|---|---|
| Gelatin | 2.59 | 33.33 |
| Water | 5.18 | 66.67 |
| Total | 7.77 | 100.00 |

To form the mallow mix the sucrose solution from first tank 20 was pumped into third tank 24 and cooled to 82.2°C (180°F). Then the fruit solids and seed sugar, powdered sugar, were added to third tank 24. The mallow mixture was then cooled to 73.9°C (165°F) at which point the gelatin solution, flavor, color, and colloidal suspension of hexametaphosphate was added. The hexametaphosphate was made up in the water noted in Table 3 below. The components added to third tank 24 are as noted below in Table 3.

**TABLE 3**

| Component | Kilograms | Percent by Weight |
|---|---|---|
| Sucrose Solution | 121.5 | 89.22 |
| Gelatin Solution | 7.77 | 5.7 |
| Powdered Sugar (seed sugar) | 2.32 | 1.7 |
| Fruit Solids | 3.27 | 2.4 |
| Flavor | 0.572 | 0.42 |
| Liquid Color | 0.594 | 0.44 |
| Sodium Hexametaphosphate | 0.027 | 0.02 |
| Water | 0.136 | 0.10 |
| Total | 136.23 | 100.00 |

The formed mallow mix is then pumped through aerator 28 to produce a density of 263.5 g/l (2.2 pounds per gallon). The aerated solution was pumped through a thermally controlled tube 30 and chilled to 51.7°C (125°F). The chilled solution was then extruded through extruder 32 with final treatment being as described above under the general procedure.

### Example 2

Utilizing the general procedure described above Kosher marbits were prepared using the solutions described below following the procedure as above. The sucrose solution was prepared per Table 4 below by combining the water, sucrose, and corn syrup in first tank 20 at a temperature of 93.3°C (200°F). The dextrose was then added and the mixture was heated to a temperature of from 117.2 to 118.5°C (243 to 246°F).

**TABLE 4**

| Component | Kilograms | Percent by Weight |
|---|---|---|
| Sucrose | 81.72 | 65.69 |
| 64 DE Corn Syrup | 15.44 | 12.41 |
| Water | 14.53 | 11.68 |
| Dextrose | 12.71 | 10.22 |
| Total | 124.40 | 100.00 |

The film-forming solution used was egg albumen hydrated in cold water, strained, and added to tank 22 utilizing the components described in Table 5 below.

**TABLE 5**

| Component | Kilograms | Percent by Weight |
|---|---|---|
| Egg Albumen | 5.45 | 33.33 |
| Water | 10.90 | 66.67 |
| Total | 16.34 | 100.00 |

To form the mallow mix the sucrose solution from first tank 20 was pumped into third tank 24 and cooled to 82.2°C (180°F). Then the fruit solids and seed sugar, powdered sugar, were added to third tank 24. The mallow mixture was then cooled to 60.0°C (140 °F) at which point the albumen solution, flavor, and solution of hexametaphosphate was added. The hexametaphosphate was made up in the water noted in Table 6 below. The components added to third tank 24 are as noted below in Table 6

**TABLE 6**

| Component | Kilograms | Percent by Weight |
|---|---|---|
| Sucrose Solution | 122.2 | 84.53 |
| Albumen Solution | 16.34 | 11.31 |
| Powdered Sugar (seed sugar) | 2.32 | 1.60 |
| Fruit Solids | 3.27 | 2.26 |
| Flavor | 0.272 | .19 |
| Sodium Hexametaphosphate | 0.027 | .019 |
| Water | 0.136 | 0.09 |
| Total | 136.23 | 100.00 |

The formed mallow mix is then pumped through aerator 28 to produce a density of 263.5 g/l (2.2 pounds per gallon) The aerated solution was pumped through a thermally controlled tube 30 and chilled to 51.7°C (125°F). The chilled solution was then extruded through extruder 32 with final treatment being as described above under the general procedure.

The present invention discloses a method for incorporating very high levels of fruit solids into either marbits or marshmallows, unlike previously disclosed formulations. The marbits and marshmallows according to the present invention have nearly identical fruit solids contents to those of real fruit. For example, most fruits range from 85 to 92% water with the rest being solids. Even high solids content fruits such as bananas contain only 25% solids by weight. The foregoing invention has been described in accordance with the relevant legal standards; thus the description is exemplary rather than limiting in nature. Variations and modifications to the disclosed embodiment may become apparent to those skilled in the art and do come within the scope of the invention. Accordingly, the scope of legal protection afforded this invention can only be determined by studying the following claims.

## Claims

1. An aerated confection comprising from 0.5 to 20% by weight on a dry weight basis of fruit solids based on the total weight of said aerated confection and from 0.01 to 0.2% by weight of a hexametaphosphate based on the total weight, said aerated confection having a moisture content of from 1 to 5% by weight.

2. The aerated confection of claim 1, wherein said fruit solids are present in an amount of from 0.5 to 10% by weight.

3. The aerated confection of claim 1, wherein said fruit solids are present in an amount of from 2 to 5% by weight.

4. The aerated confection of claim 1 wherein said fruit solids comprise a dried fruit powder, a drum dried fruit solid, a freeze dried fruit solid, an evaporated fruit puree having a solids level of greater than 80% by weight, or a mixture thereof.

5. The aerated confection of claim 1 comprising from 0.02 to 0.05% by weight of a hexametaphosphate.

6. The aerated confection of claim 1 having a moisture content of from 2 to 3% by weight.

7. The aerated confection of claim 1 further comprising from .1 to 3 % by weigh of at least one flavor or color.

8. The aerated confection of claim 1 further comprising from 1 to 20% by weight on a dry weight basis of seed sugar.

9. The aerated confection of claim 1 further comprising from .5 to 15% by weight of a film forming agent.

10. The aerated confection of claim 9 wherein said film forming agent comprises a gelatin, an albumin, a pectin, a carboxymethyl cellulose, an alginate, a gum, or mixtures thereof.

11. The aerated confection of claim 10 wherein said gum comprises a guar gum, a carrageenan, an arabic gum, a xanthan gum, or mixtures thereof.

12. The aerated confection of claim 9 wherein said film forming agent is present in an amount of from about 1 to 7% by weight.

13. The aerated confection of claim 1 further comprising sucrose, corn syrup, dextrose, maltose, lactose, glycerin, maltodextrin, a glucose syrup, or mixtures thereof.

14. An aerated confection comprising from 0.5 to 20% by weight on a dry weight basis of fruit solids based on the total weight of said aerated confection and from 0.01 to 0.2% by weight of a hexametaphosphate based on the total weight, said aerated confection having a moisture content of from 10 to 30% by weight.

15. The aerated confection of claim 14, wherein said fruit solids are present in an amount of from 0.5 to 10% by weight.

16. The aerated confection of claim 14, wherein said fruit solids are present in an amount of from 2 to 5% by weight.

17. The aerated confection of claim 14 wherein said fruit solids comprise a dried fruit powder, a drum dried fruit solid, a freeze dried fruit solid, an evaporated fruit puree having a solids level of greater than 80% by weight, or a mixture thereof.

18. The aerated confection of claim 14 comprising from 0.02 to 0.05% by weight of a hexametaphosphate.

19. The aerated confection of claim 14 having a moisture content of from 10 to 25% by weight.

20. The aerated confection of claim 14 having a moisture content of from 10 to 20% by weight.

21. The aerated confection of claim 14 further comprising from 1 to 20% by weight on a dry weight basis of seed sugar.

22. The aerated confection of claim 14 further comprising from .5 to 15% by weight of a film forming agent.

23. The aerated confection of claim 22 wherein said film forming agent comprises a gelatin, an albumin, a pectin, a carboxymethyl cellulose, an alginate, a gum, or mixtures thereof.

24. The aerated confection of claim 23 wherein said gum comprises a guar gum, a carrageenan, an arabic gum, a xanthan gum, or mixtures thereof.

25. The aerated confection of claim 22 wherein said film forming agent is present in an amount of from about 1 to 7% by weight.

26. The aerated confection of claim 14 further comprising sucrose, corn syrup, dextrose, maltose, lactose, glycerin, maltodextrin, a glucose syrup, or mixtures thereof.

27. The aerated confection of claim 14 further comprising from 0.1 to 3% by weight of at least one flavor or color.

28. A method for preparing an aerated mallow mixture comprising the steps of:
a) providing a sucrose solution comprising sucrose and water at a temperature above the crystallization temperature of the sucrose solution;
b) cooling the sucrose solution to a temperature at or below its crystallization temperature;
c) adding to the cooled sucrose solution of step b) an amount of from 0.5 to 20% by weight of fruit solids based on the final weight of the mallow mixture;
d) further cooling the solution from step c) and adding to the solution from 0.5 to 15% by weight of a film forming agent and from 0.01 to 0.2% by weight of a hexametaphosphate, both based on the final weight of the mallow mixture; and
e) aerating the mallow mixture to a density of from 175.7 to 479.2 g/l (1.5 to 4 pounds per gallon) to form the aerated mallow mixture.

29. The method of claim 28 wherein step a) comprises providing a sucrose solution having a solids level of from about 82 to 89%.

30. The method of claim 28 wherein step a) comprises providing a sucrose solution comprising sucrose, water and at least one of a corn syrup, a dextrose, a maltose, a lactose, a glycerin, a maltodextrin, a glucose syrup, or mixtures thereof.

31. The method of claim 28 wherein step a) comprises providing the sucrose solution at a temperature of from 93.3 to 121.1°C (200 to 250 degrees Fahrenheit).

32. The method of claim 28 wherein step b) comprises cooling the sucrose solution to a temperature of from 73.3 to 82.2°C (165 to 180 degrees Fahrenheit).

33. The method of claim 28 wherein step c) comprises adding a dried fruit powder, a drum dried fruit solid, a freeze dried fruit solid, an evaporated fruit puree having a solids level of greater than 80% by weight, or a mixture thereof.

34. The method of claim 28 wherein step c) comprises adding an amount of from .5 to 10% by weight of fruit solids based on the final weight of the mallow mixture.

35. The method of claim 28 wherein step c) comprises adding an amount of from 2 to 5% by weight of fruit solids based on the final weight of the mallow mixture.

36. The method of claim 28 wherein step c) further comprises adding from 1 to 20% by weight of a seed sugar on a dry weight basis based on the final weight of the mallow mixture to the cooled sucrose solution.

37. The method of claim 28 wherein step d) further comprises providing a film forming agent comprising at least one of a gelatin, an albumin, a pectin, a carboxymethyl cellulose, an alginate, a gum, or mixtures thereof.

38. The method of claim 37 wherein step d) further comprises selecting a the gum at least one of a guar gum, a carrageenan, an arabic gum, a xanthan gum, or mixtures thereof.

39. The method of claim 28 wherein step d) comprises providing the film forming agent in an amount of from 1 to 7% by weight.

40. The method of claim 28 wherein step d) comprises providing the hexametaphosphate in an amount of from .02 to 0.05% by weight.

41. The method of claim 28 wherein step d) further comprises adding at least one flavor or color in an amount of from 0.1 to 3% by weight based on the final weight of the mallow mixture.

42. The method of claim 28 wherein step e) comprises aerating the mallow mixture to a density of from 239.6 to 359.4 g/l (2 to 3 pounds per gallon).

43. The method of claim 28 further comprising extruding the aerated mallow mixture, cutting the extruded mallow mixture into pieces to form aerated confection pieces having a moisture content of from 10 to 30%.

44. The method of claim 28 further comprising extruding the aerated mallow mixture, cutting the extruded mallow mixture into pieces, and drying the pieces to a moisture content of from 1 to 5% to form an aerated confection having a moisture content of from 1 to 5%.

45. The method of claim 44 comprising drying the pieces to a moisture content of from 2 to 3%.

## Patentansprüche

1. Aufgeschlagene bzw. aufgelockerte Süßware, welche 0,5 bis 20 Gewichtsprozent an festen Fruchtbestandteilen auf einer trockenen Gewichtsbasis aufweist, bezogen auf das Gesamtgewicht der aufgeschlagenen Süßware, und welche von 0,01 bis 0,2 Gewichtsprozent eines Hexametaphosphats aufweist, bezogen auf das Gesamtgewicht, wobei die aufgeschlagene Süßware einen Feuchtigkeitsgehalt von 1 bis 5 Gewichtsprozent aufweist.

2. Aufgeschlagene Süßware gemäß Anspruch 1, in welcher die festen Fruchtbestandteile in einer Menge von 0,5 bis 10 Gewichtsprozent vorhanden sind.

3. Aufgeschlagene Süßware gemäß Anspruch 1, in welcher die festen Fruchtbestandteile in einer Menge von 2 bis 5 Gewichtsprozent vorhanden sind.

4. Aufgeschlagene Süßware gemäß Anspruch 1, in welcher die festen Fruchtbestandteile ein trockenes Fruchtpulver umfassen, einen mittels einer Trommel getrockneten festen Fruchtbestandteil, einen gefriergetrockneten festen Fruchtbestandteil, ein kondensiertes Fruchtpüree mit einem Feststoffanteil von mehr als 80 Gewichtsprozent oder eine Mischung derselben.

5. Aufgeschlagene Süßware gemäß Anspruch 1, welche von 0,02 bis 0,05 Gewichtsprozent eines Hexametaphosphats umfasst.

6. Aufgeschlagene Süßware gemäß Anspruch 1 mit einem Feuchtigkeitsgehalt von 2 bis 3 Gewichtsprozent.

7. Aufgeschlagene Süßware gemäß Anspruch 1, welche weiterhin von 0,1 bis 3 Gewichtsprozent von mindestens einem Aromastoff oder einem Farbstoff umfasst.

8. Aufgeschlagene Süßware gemäß Anspruch 1, welche weiterhin von 1 bis 20 Gewichtsprozent, bezogen auf eine trockene Gewichtsbasis, an Samenzucker umfasst.

9. Aufgeschlagene Süßware gemäß Anspruch 1, welche weiterhin von 0,5 bis 15 Gewichtsprozent eines einen Film bildenden Mittels umfasst.

10. Aufgeschlagene Süßware gemäß Anspruch 9, in welcher das den Film bildende Mittel eine Gelatine, ein Albumin, ein Pektin, eine Carboxymethylcellulose, ein Alginat, ein Gummi oder Mischungen derselben umfasst.

11. Aufgeschlagene Süßware gemäß Anspruch 10, in welcher das Gummi ein Guargummi, ein Carrageenan, ein Gummi-Arabicum, ein Xanthangummi oder Mischungen derselben umfasst.

12. Aufgeschlagene Süßware gemäß Anspruch 9, in welcher das den Film bildende Mittel in einer Menge von etwa 1 bis 7 Gewichtsprozent vorhanden ist.

13. Aufgeschlagene Süßware gemäß Anspruch 1, welche weiterhin Saccharose, Maissirup, Dextrose, Maltose, Lactose, Glycerin, Maltodextrin, einen Glucosesirup oder Mischungen derselben umfasst.

14. Aufgeschlagene Süßware, welche 0,5 bis 20 Gewichtsprozent an festen Fruchtbestandteilen auf einer trockenen Gewichtsbasis aufweist, bezogen auf das Gesamtgewicht der aufgeschlagenen Süßware, und welche von 0,01 bis 0,2 Gewichtsprozent eines Hexametaphosphats aufweist, bezogen auf das Gesamtgewicht, wobei die aufgeschlagene Süßware einen Feuchtigkeitsgehalt von 10 bis 30 Gewichtsprozent aufweist.

15. Aufgeschlagene Süßware gemäß Anspruch 14, in welcher die festen Fruchtbestandteile in einer Menge von 0,5 bis 10 Gewichtsprozent vorhanden sind.

16. Aufgeschlagene Süßware gemäß Anspruch 14, in welcher die festen Fruchtbestandteile in einer Menge von 2 bis 5 Gewichtsprozent vorhanden sind.

17. Aufgeschlagene Süßware gemäß Anspruch 14, in welcher die festen Fruchtbestandteile ein trockenes Fruchtpulver umfassen, einen mittels einer Trommel getrockneten festen Fruchtbestandteil, einen gefriergetrockneten festen Fruchtbestandteil, ein kondensiertes Fruchtpüree mit einem Feststoffanteil von mehr als 80 Gewichtsprozent oder eine Mischung derselben.

18. Aufgeschlagene Süßware gemäß Anspruch 14, welche von 0,02 bis 0,05 Gewichtsprozent eines Hexametaphosphats umfasst.

19. Aufgeschlagene Süßware gemäß Anspruch 14 mit einem Feuchtigkeitsgehalt von 10 bis 25 Gewichtsprozent.

20. Aufgeschlagene Süßware gemäß Anspruch 14 mit einem Feuchtigkeitsgehalt von 10 bis 20 Gewichtsprozent.

21. Aufgeschlagene Süßware gemäß Anspruch 14, welche weiterhin von 1 bis 20 Gewichtsprozent, bezogen auf eine trockene Gewichtsbasis, an Samenzucker umfasst.

22. Aufgeschlagene Süßware gemäß Anspruch 14, welche weiterhin von 0,5 bis 15 Gewichtsprozent eines einen Film bildenden Mittels umfasst.

23. Aufgeschlagene Süßware gemäß Anspruch 22, wobei das den Film bildende Mittel eine Gelatine, ein Albumin, ein Pektin, eine Carboxymethylcellulose, ein Alginat, ein Gummi oder Mischungen derselben umfasst.

24. Aufgeschlagene Süßware gemäß Anspruch 23, in welcher das Gummi ein Guargummi, ein Carrageenan, ein Gummi-Arabicum, ein Xanthangummi oder Mischungen derselben umfasst.

25. Aufgeschlagene Süßware gemäß Anspruch 22, in welcher das den Film bildende Mittel in einer Menge von etwa 1 bis 7 Gewichtsprozent vorhanden ist.

26. Aufgeschlagene Süßware gemäß Anspruch 14, welche weiterhin Saccharose, Maissirup, Dextrose, Maltose, Lactose, Glycerin, Maltodextrin, einen Glucosesirup oder Mischungen derselben umfasst.

27. Aufgeschlagene Süßware gemäß Anspruch 14, welche weiterhin von 0,1 bis 3 Gewichtsprozent von mindestens einem Aromastoff oder Farbstoff umfasst.

28. Verfahren zur Herstellung einer aufgeschlagenen Schaumzuckermischung, welches die folgenden Verfahrensschritte aufweist:
a) eine Bereitstellung einer Saccharoselösung, welche Saccharose und Wasser bei einer Temperatur oberhalb der Kristallisationstemperatur der Saccharoselösung umfasst;
b) ein Abkühlen der Saccharoselösung auf eine Temperatur bei oder unterhalb der Kristallisationstemperatur derselben;
c) ein Hinzufügen zu der abgekühlten Saccharoselösung aus Schritt b) einer Menge von 0,5 bis 20 Gewichtsprozent an festen Fruchtbestandteilen, bezogen auf das Endgewicht der Schaumzuckermischung;
d) ein weiteres Abkühlen der Lösung aus Schritt c) und ein Hinzufügen zu der Lösung von 0,5 bis 15 Gewichtsprozent eines einen Film bildenden Mittels und von 0,01 bis 0,2 Gewichtsprozent eines Hexametaphosphats, beides bezogen auf das Endgewicht der Schaumzuckermischung; und
e) ein Aufschlagen bzw. Auflockern der Schaumzuckermischung auf eine Dichte von 175,7 bis 479,2 g/l (1,5 bis 4 Pfund pro Gallone), um die aufgeschlagene Schaumzuckermischung zu bilden.

29. Verfahren gemäß Anspruch 28, bei welchem der Schritt a) ein Bereitstellen einer Saccharoselösung mit einem Feststoffanteil von etwa 82 bis 89 Prozent umfasst.

30. Verfahren gemäß Anspruch 28, bei welchem der Schritt a) ein Bereitstellen einer Saccharoselösung umfasst, welche Saccharose, Wasser und mindestens eines unter Maissirup, Dextrose, Maltose, Lactose, Glycerin, Maltodextrin, Glucosesirup oder Mischungen derselben umfasst.

31. Verfahren gemäß Anspruch 28, bei welchem der Schritt a) ein Bereitstellen der Saccharoselösung bei einer Temperatur von 93,3 bis 121,1 °C (200 bis 250 Grad Fahrenheit) umfasst.

32. Verfahren gemäß Anspruch 28, bei welchem der Schritt b) ein Abkühlen der Saccharoselösung auf eine Temperatur von 73,9 bis 82,2 °C (165 bis 180 Grad Fahrenheit) umfasst.

33. Verfahren gemäß Anspruch 28, bei welchem der Schritt c) ein Hinzugeben umfasst eines trockenen Fruchtpulvers, eines mittels einer Trommel getrockneten festen Fruchtbestandteiles, eines gefriergetrockneten festen Fruchtbestandteils, eines kondensierten Fruchtpürees mit einem Feststoffanteil von mehr als 80 Gewichtsprozent oder einer Mischung derselben.

34. Verfahren gemäß Anspruch 28, bei welchem der Schritt c) ein Hinzugeben einer Menge von 0,5 bis 10 Gewichtsprozent an festen Fruchtbestandteilen, bezogen auf das Endgewicht der Schaumzuckermischung, umfasst.

35. Verfahren gemäß Anspruch 28, bei welchem der Schritt c) ein Hinzugeben einer Menge von 2 bis 5 Gewichtsprozent an festen Fruchtbestandteilen, bezogen auf das Endgewicht der Schaumzuckermischung, umfasst.

36. Verfahren gemäß Anspruch 28, bei welchem der Schritt c) weiterhin ein Hinzugeben von 1 bis 20 Gewichtsprozent Samenzucker, bezogen auf eine trockene Gewichtsbasis und bezogen auf das Endgewicht der Schaumzuckermischung, zu der abgekühlten Saccharoselösung umfasst.

37. Verfahren gemäß Anspruch 28, bei welchem der Schritt d) weiterhin ein Bereitstellen eines einen Film bildenden Mittels umfasst, welches mindestens eines unter Gelatine, Albumin, Pektin, Carboxymethylcellulose, Alginat, Gummi oder Mischungen derselben umfasst.

38. Verfahren gemäß Anspruch 37, bei welchem der Schritt d) weiterhin ein Auswählen mindestens eines Gummis unter Guargummi, Carrageenan, Gummi-Arabicum, Xanthangummi oder Mischungen derselben umfasst.

39. Verfahren gemäß Anspruch 28, bei welchem der Schritt d) das Bereitstellen des einen Film bildenden Mittels in einer Menge von 1 bis 7 Gewichtsprozent umfasst.

40. Verfahren gemäß Anspruch 28, bei welchem der Schritt d) das Bereitstellen des Hexametaphosphats in einer Menge von 0,02 bis 0,05 Gewichtsprozent umfasst.

41. Verfahren gemäß Anspruch 28, bei welchem der Schritt d) weiterhin ein Hinzugeben von mindestens einem Aromastoff oder einem Farbstoff in einer Menge von 0,1 bis 3 Gewichtsprozent umfasst, bezogen auf das Endgewicht der Schaumzuckermischung.

42. Verfahren gemäß Anspruch 28, bei welchem der Schritt e) ein Aufschlagen der Schaumzuckermischung auf eine Dichte von 239,6 bis 359,4 g/l (2 bis 3 Pfund pro Gallone) umfasst.

43. Verfahren gemäß Anspruch 28, welches weiterhin umfasst ein Extrudieren der aufgeschlagenen Schaumzuckermischung, ein Schneiden der extrudierten Schaumzuckermischung in Stücke, um aufgeschlagene Süßwarenstücke mit einem Feuchtigkeitsgehalt von 10 bis 30 % herzustellen.

44. Verfahren gemäß Anspruch 28, welches weiterhin umfasst ein Extrudieren der aufgeschlagenen Schaumzuckermischung, ein Schneiden der extrudierten Schaumzuckermischung in Stücke und ein Trocknen der Stücke bis auf einen Feuchtigkeitsgehalt von 1 bis 5 %, um eine aufgeschlagene Süßware mit einem Feuchtigkeitsgehalt von 1 bis 5 % herzustellen.

45. Verfahren gemäß Anspruch 44, welches ein Trocknen der Stücke bis auf einen Feuchtigkeitsgehalt von 2 bis 3 % umfasst.

## Revendications

1. Confiserie aérée comprenant de 0,5 à 20% en poids sur une base de poids sec de morceaux de fruits basé sur le poids total de ladite confiserie aérée et de 0,01 à 0,2% en poids d'un hexamétaphosphate basé sur le poids total, ladite confiserie aérée présentant une teneur en humidité de 1 à 5% en poids.

2. Confiserie aérée suivant la revendication 1, dans laquelle lesdits morceaux de fruits sont présents dans une quantité de 0,5 à 10% en poids.

3. Confiserie aérée suivant la revendication 1, dans laquelle lesdits morceaux de fruits sont présents dans une quantité de 2 à 5% en poids.

4. Confiserie aérée suivant la revendication 1, dans laquelle lesdits morceaux de fruits comprennent une poudre de fruits séchés, des morceaux de fruits séchés au tambour, des morceaux de fruits lyophilisés, une purée de fruits évaporée avec une teneur en morceaux de plus de 80% en poids, ou un mélange de ceux-ci.

5. Confiserie aérée suivant la revendication 1, comprenant de 0,02 à 0,05% en poids d'un hexamétaphosphate.

6. Confiserie aérée suivant la revendication 1, présentant une teneur en humidité de 2 à 3% en poids.

7. Confiserie aérée suivant la revendication 1, comprenant en outre de 0,1 à 3% en poids d'au moins un arôme ou une couleur.

8. Confiserie aérée suivant la revendication 1, comprenant en outre de 1 à 20% en poids sur une base de poids sec de sucre de semences.

9. Confiserie aérée suivant la revendication 1, comprenant en outre de 0,5 à 15% en poids d'un agent formant un film.

10. Confiserie aérée suivant la revendication 9, dans laquelle ledit agent formant un film comprend une gélatine, une albumine, une pectine, une carboxyméthylcellulose, un alginate, une gomme, ou des mélanges de ceux-ci.

11. Confiserie aérée suivant la revendication 10, dans laquelle ladite gomme comprend une gomme de guar, un carrageenan, une gomme arabique, une gomme de xanthane, ou des mélanges de ceux-ci.

12. Confiserie aérée suivant la revendication 9, dans laquelle ledit agent formant un film est présent dans une quantité d'environ 1 à 7% en poids.

13. Confiserie aérée suivant la revendication 1, comprenant en outre du saccharose, un sirop de maïs, un dextrose, un maltose, un lactose, une glycérine, une maltodextrine, un sirop de glucose, ou des mélanges de ceux-ci.

14. Confiserie aérée, comprenant de 0,5 à 20% en poids sur une base de poids sec de morceaux de fruits basé sur le poids total de ladite confiserie aérée et de 0,01 à 0,2% en poids d'un hexamétaphosphate basé sur le poids total, ladite confiserie aérée présentant une teneur en humidité de 10 à 30% en poids.

15. Confiserie aérée suivant la revendication 14, dans laquelle lesdits morceaux de fruits sont présents dans une quantité de 0,5 à 10% en poids.

16. Confiserie aérée suivant la revendication 14, dans laquelle lesdits morceaux de fruits sont présents dans une quantité de 2 à 5% en poids.

17. Confiserie aérée suivant la revendication 14, dans laquelle lesdits morceaux de fruits comprennent une poudre de fruits séchés, des morceaux de fruits séchés au tambour, des morceaux de fruits lyophilisés, une purée de fruits évaporée avec une teneur en morceaux de plus de 80% en poids, ou un mélange de ceux-ci.

18. Confiserie aérée suivant la revendication 14, comprenant de 0,02 à 0,05% en poids d'un hexamétaphosphate.

19. Confiserie aérée suivant la revendication 14, présentant une teneur en humidité de 10 à 25% en poids.

20. Confiserie aérée suivant la revendication 14, présentant une teneur en humidité de 10 à 20% en poids.

21. Confiserie aérée suivant la revendication 14, comprenant en outre de 1 à 20% en poids sur une base de poids sec de sucre de semences.

22. Confiserie aérée suivant la revendication 14, comprenant en outre de 0,5 à 15% en poids d'un agent formant un film.

23. Confiserie aérée suivant la revendication 22, dans laquelle ledit agent formant un film comprend une gélatine, une albumine, une pectine, une carboxyméthylcellulose, un alginate, une gomme, ou des mélanges de ceux-ci.

24. Confiserie aérée suivant la revendication 23, dans laquelle ladite gomme comprend une gomme de guar, un carrageenan, une gomme arabique, une gomme de xanthane, ou des mélanges de ceux-ci.

25. Confiserie aérée suivant la revendication 22, dans laquelle ledit agent formant un film est présent dans une quantité d'environ 1 à 7% en poids.

26. Confiserie aérée suivant la revendication 14, comprenant en outre du saccharose, un sirop de maïs, un dextrose, un maltose, un lactose, une glycérine, une maltodextrine, un sirop de glucose, ou des mélanges de ceux-ci.

27. Confiserie aérée suivant la revendication 14, comprenant en outre de 0,1 à 3% en poids d'au moins un arôme ou une couleur.

28. Procédé pour la préparation d'un mélange de guimauve aérée comprenant les étapes:
a) de fourniture d'une solution de saccharose comprenant du saccharose et de l'eau à une température au-dessus de la température de cristallisation de la solution de saccharose;
b) de refroidissement de la solution de saccharose à une température au niveau ou en dessous de sa température de cristallisation;
c) d'ajout à la solution de saccharose refroidie de l'étape b) d'une quantité de 0,5 à 20% en poids de morceaux de fruits basé sur le poids final du mélange de guimauve;
d) de refroidissement supplémentaire de la solution provenant de l'étape c) et d'ajout à la solution de 0,5 à 15% en poids d'un agent formant un film et de 0,01 à 0,2% en poids d'un hexamétaphosphate, les deux basés sur le poids final du mélange de guimauve; et
e) d'aération du mélange de guimauve à une densité de 175,7 à 479,2 g/l (de 1,5 à 4 livres par gallon) pour former le mélange de guimauve aérée.

29. Procédé suivant la revendication 28, dans lequel l'étape a) comprend la fourniture d'une solution de saccharose avec une teneur en solides d'environ 82 à 89%.

30. Procédé suivant la revendication 28, dans lequel l'étape a) comprend la fourniture d'une solution de saccharose comprenant du saccharose, de l'eau et au moins un parmi un sirop de maïs, un dextrose, un maltose, un lactose, une glycérine, une maltodextrine, un sirop de glucose, ou des mélanges de ceux-ci.

31. Procédé suivant la revendication 28, dans lequel l'étape a) comprend la fourniture de la solution de saccharose à une température de 93,3 à 121,1°C (de 200 à 250 degrés Fahrenheit).

32. Procédé suivant la revendication 28, dans lequel l'étape b) comprend le refroidissement de la solution de saccharose à une température de 73,9 à 82,2°C (de 165 à 180 degrés Fahrenheit).

33. Procédé suivant la revendication 28, dans lequel l'étape c) comprend l'ajout d'une poudre de fruits séchés, de morceaux de fruits séchés au tambour, de morceaux de fruits lyophilisés, d'une purée de fruits évaporée avec une teneur en morceaux de plus de 80% en poids, ou un mélange de ceux-ci.

34. Procédé suivant la revendication 28, dans lequel l'étape c) comprend l'ajout d'une quantité de 0,5 à 10% en poids de morceaux de fruits basé sur le poids final du mélange de guimauve.

35. Procédé suivant la revendication 28, dans lequel l'étape c) comprend l'ajout d'une quantité de 2 à 5% en poids de morceaux de fruits basé sur le poids final du mélange de guimauve.

36. Procédé suivant la revendication 28, dans lequel l'étape c) comprend en outre l'ajout de 1 à 20% en poids d'un sucre de semences sur une base de poids sec basé sur le poids final du mélange de guimauve à la solution de saccharose refroidie.

37. Procédé suivant la revendication 28, dans lequel l'étape d) comprend en outre la fourniture d'un agent formant un film comprenant au moins un parmi une gélatine, une albumine, une pectine, une carboxyméthylcellulose, un alginate, une gomme, ou des mélanges de ceux-ci.

38. Procédé suivant la revendication 37, dans lequel l'étape d) comprend en outre le choix d'au moins une gomme parmi une gomme de guar, un carrageenan, une gomme arabique, une gomme de xanthane, ou des mélanges de ceux-ci.

39. Procédé suivant la revendication 28, dans lequel l'étape d) comprend la fourniture de l'agent formant un film dans une quantité de 1 à 7% en poids.

40. Procédé suivant la revendication 28, dans lequel l'étape d) comprend la fourniture de l'hexamétaphosphate dans une quantité de 0,02 à 0,05% en poids.

41. Procédé suivant la revendication 28, dans lequel l'étape d) comprend en outre l'ajout d'au moins un arôme ou une couleur dans une quantité de 0,1 à 3% en poids basé sur le poids final du mélange de guimauve.

42. Procédé suivant la revendication 28, dans lequel l'étape e) comprend l'aération du mélange de guimauve à une densité de 239,6 à 359,4 g/l (de 2 à 3 livres par gallon).

43. Procédé suivant la revendication 28, comprenant en outre l'extrusion du mélange de guimauve aérée, la coupe du mélange de guimauve extrudé en morceaux pour former des morceaux de confiserie aérée avec une teneur en humidité de 10 à 30%.

44. Procédé suivant la revendication 28, comprenant en outre l'extrusion du mélange de guimauve aérée, la coupe du mélange de guimauve extrudé en morceaux et le séchage des morceaux à une teneur en humidité de 1 à 5% pour former une confiserie aérée avec une teneur en humidité de 1 à 5%.

45. Procédé suivant la revendication 44, comprenant le séchage des morceaux à une teneur en humidité de 2 à 3%.
